# EUROPEAN PATENT APPLICATION

(11) **EP 4 837 731 A1**
(43) Date of publication of application: **11.11.2026**
(21) Application number: 26166745.5
(22) Date of filing: 23.03.2026
(51) Int. Cl.: B29C 70/44, B29C 70/54, B29D 99/00

(54) **VACUUM INFUSION BAG FILM STRUCTURE FOR WIND TURBINE BLADES**

(30) Priority: 06.05.2025 CN 202510577500
(71) Applicant: Envision Energy Co., Ltd., Wuxi, Jiangsu 214400 (CN)
(72) Inventor: CHEN, Yabo, Jiangyin City, Wuxi City, Jiangsu Province, 214400 (CN); CHEN, Weiliang, Jiangyin City, Wuxi City, Jiangsu Province, 214400 (CN); YAN, Xu, Jiangyin City, Wuxi City, Jiangsu Province, 214400 (CN)
(74) Representative: Herrero & Asociados, S.L.

(57) **Abstract**

The present disclosure discloses a vacuum infusion bag film structure for wind turbine blades. The vacuum infusion bag film structure for the wind turbine blades includes at least one bag film, which includes a substrate layer and a thermochromic layer, where the thermochromic layer is arranged on the substrate layer or embedded within the substrate layer. The thermochromic layer is configured to change color in response to temperature change to monitor local temperature anomaly during a vacuum infusion process of the wind turbine blades. When a temperature of a region covered by the thermochromic layer exceeds a preset threshold, the thermochromic layer changes from a first color to a second color, and the first color is different from the second color. According to the technical solutions provided in the present disclosure, by arranging the thermochromic layer on the bag film, a real-time and visual temperature monitoring means can be provided during blade heating and curing or maintenance heating.

## Description

### TECHNICAL FIELD

The present disclosure relates to the field of wind turbine blade technology, and more particularly, to a vacuum infusion bag film structure for wind turbine blades.

### BACKGROUND

In manufacturing processes of wind turbine blades, a vacuum infusion process is a commonly used composite material forming method. In the vacuum infusion process, resin is infused into a prelaid fiber reinforced material and then is cured in a vacuum environment, to ultimately form a high-strength composite material structure.

However, during vacuum infusion and curing processes, exothermic reaction of the resin may cause local excess temperature. Traditional temperature monitoring methods (such as thermocouples or infrared temperature measurement) generally can only achieve "point" or "line" monitoring, which is difficult to cover entire surfaces of wind turbine blades and thus has blind spots in monitoring, resulting in higher quality risks and production costs in the manufacturing processes of the wind turbine blades.

### SUMMARY

Objectives of the present disclosure are to provide a vacuum infusion bag film structure for wind turbine blades, which can provide, by arranging a thermochromic layer on a bag film, a real-time and visual temperature monitoring means during blade heating and curing or maintenance heating.

The present disclosure provides a vacuum infusion bag film structure for wind turbine blades, which includes:
at least one bag film comprising a substrate layer and a thermochromic layer, where the thermochromic layer is arranged on or embedded within the substrate layer.

The thermochromic layer is configured to change color in response to temperature change to monitor local temperature anomaly during a vacuum infusion process of the wind turbine blades. When a temperature of a region covered by the thermochromic layer exceeds a preset threshold, the thermochromic layer changes from a first color to a second color, and the first color is different from the second color.

Beneficial effects: the vacuum infusion bag film structure for the wind turbine blades has the substrate layer on the bag film, and the substrate layer can ensure better airtightness and mechanical strength of the bag film. By arranging the thermochromic layer on the bag film, a real-time and visual temperature monitoring means can be provided during blade heating and curing or maintenance heating. The thermochromic layer can cover the entire bag film or a partial region of the bag film, such that when the bag film is attached to surfaces of the wind turbine blades, the region covered by the thermochromic layer can be used to monitor local temperature anomaly during vacuum infusion process of the wind turbine blades. Once the surface temperature of the region covered by the thermochromic layer exceeds the preset threshold, the color changes from the first color to the second color (for example, changes from a light color to a dark color), so an operator can intuitively see the color-changing region, thereby achieving comprehensive and real-time temperature monitoring of the surfaces of the wind turbine blades, thus avoiding neglect of local overheating caused by monitoring blind spots.

During vacuum infusion and curing processes, exothermic reaction of resin may readily cause local excess temperature. The bag film structure can quickly respond to the temperature change. When the local temperature rises abnormally beyond the preset threshold, the region covered by the thermochromic layer immediately changes color, and a warning is issued to the operator in a timely manner. If the local temperature anomaly can be detected in a timely manner, the operator can intervene promptly, which can effectively avoid quality problems caused by the local overheating, reduce defect rate of the blades, improve product quality, and ensure reliability and stability of the wind turbine blades in actual operation.

Meanwhile, using this bag film structure for temperature monitoring does not require complex equipment installation and debugging. The operator only need to observe the color changes of the bag film to determine the temperature of the blades. Compared to traditional monitoring methods that require wiring for thermocouples and specialized equipment for infrared temperature measurement for calibration and maintenance, this bag film structure simplifies operation processes and reduces equipment procurement, installation, and maintenance costs.

In addition, usage of this bag film structure is basically the same as that of ordinary bag films, and there is no need to change vacuum pumping, laying methods or curing processes. What is needed is the thermochromic layer additionally provided in a multi-layer structure of the bag film itself, with minimal process changes and easy large-scale promotion.

In an optional embodiment, the thermochromic layer is a reversible thermochromic layer, and when a surface temperature of the region covered by the thermochromic layer decreases from a state exceeding the preset threshold to below the preset threshold, a color of the region covered by the thermochromic layer changes from the second color to the first color.

Beneficial effects: in the production process of the wind turbine blades, resin curing is a dynamic process, during which the temperature may constantly change. The reversible thermochromic layer can track the temperature change in real time. When the temperature of the region covered by the thermochromic layer exceeds the preset threshold, the color changes from the first color to the second color, thereby alerting the operator to the temperature anomaly. When the temperature returns to normal, the color changes back from the second color to the first color. In this way, the operator can continuously monitor temperature fluctuations and promptly recognize potential issues. In an early stage of resin curing, due to intense chemical reactions, local temperature may fluctuate frequently. Reversible thermochromic properties allow the operator to grasp the temperature situation at any time, thereby ensuring that the entire curing process is carried out within an appropriate temperature range. During the production process, if temperature anomaly is detected, the operator may take measures to reduce the temperature. Once the temperature returns to normal, the color of the reversible thermochromic layer can return to the first color, and subsequent operations can be carried on without waiting for the entire production process to end before checking and adjusting. This avoids production interruptions and delays caused by temperature issues and improves production efficiency.

The reversible thermochromic properties help the operator analyze temperature variation trends. By observing frequency and duration of color changes, the operator can judge severity and duration of the temperature anomaly. If a certain region frequently changes color, it indicates that the temperature fluctuation in this region is larger, and there may be poor heat dissipation or other problems. If the color change lasts for a longer time, it indicates that the temperature anomaly is severe and process parameters need to be adjusted in a timely manner.

In an optional embodiment, the thermochromic layer is an irreversible thermochromic layer, and when a surface temperature of the region covered by the thermochromic layer decreases from a state exceeding the preset threshold to below the preset threshold, the color of the region covered by the thermochromic layer remains the second color.

Beneficial effects: the irreversible thermochromic layer can accurately record the temperature exceeding the preset threshold, and regardless of subsequent temperature changes, a color-changing region can remain the second color, providing intuitive and tamper-proof temperature anomaly records for the production process. This helps the operator to have a clear understanding of which parts of the blades having experienced temperature issues, and of approximate severity and scope of the issues during subsequent quality inspection and analysis, making it easier to trace and identify potential quality hazards.

A preset threshold temperature of the reversible thermochromic layer generally ranges between 50°C and 80°C. When the temperature of the wind turbine blades exceeds 80°C , the reversible thermochromic layer cannot change color according to an established color-changing mechanism to remind the operator because the temperature exceeds a set threshold range. The preset threshold temperature of the irreversible thermochromic layer may be flexibly set to exceed 80°C. When the temperature of the wind turbine blades exceeds 80°C, the irreversible thermochromic layer can change color according to its own set threshold above 80°C, reminding the operator to prevent the bag film from being damaged by high temperature and from causing rupture.

In an optional embodiment, at least two of the bag films are provided, and the at least two bag films are successively nested.

The thermochromic layer of at least one bag film is a reversible thermochromic layer, and the thermochromic layer of at least one bag film is an irreversible thermochromic layer.

Beneficial effects: the preset threshold temperature of the reversible thermochromic layer generally ranges between 50 °C and 80°C, and the preset threshold temperature of the irreversible thermochromic layer may exceed 80°C, and combination of both can effectively monitor a wider temperature range. Under normal temperature fluctuations, the reversible thermochromic layer may provide real-time feedback on the temperature change, allowing the operator to understand whether the temperature fluctuates within a normal range. When the temperature exceeds 80°C, the irreversible thermochromic layer begins to play a role in filling a monitoring gap of the reversible thermochromic layer in a high temperature range, thereby ensuring effective monitoring of the entire temperature range of the wind turbine blades.

By observing the color changes of the reversible and irreversible thermochromic layers on different bag films, the operator may more accurately identify potential issues with the wind turbine blades. For example, when the reversible thermochromic layer displays a normal temperature, but the irreversible thermochromic layer changes color, it indicates that the blades may likely have experienced a brief period of high temperature anomaly.

Using the at least two bag films and setting the reversible and irreversible thermochromic layers respectively are equivalent to increasing redundancy to a temperature monitoring system. Even if one of the bag films or one of the thermochromic layers malfunctions or is disturbed by external factors, the other bag film and the other thermochromic layer can still operate properly and continue to provide temperature information, thereby ensuring the reliability of the entire monitoring system, and reducing the risk of safety accidents caused by monitoring failure.

In an optional embodiment, the thermochromic layer is arranged on an outer surface of the substrate layer.

Beneficial effects: the thermochromic layer is positioned on the outer surface, such that the thermochromic layer can come into direct contact with external environment or an monitored object, to sense the temperature change more quickly and accurately. There is no need to transfer heat through an intermediate medium such as the substrate layer, thereby reducing losses and delays during the heat transfer process, allowing the thermochromic layer to more sensitively capture subtle temperature change and improve accuracy of temperature monitoring. The thermochromic layer on the outer surface is easier to observe, so people can directly and intuitively obtain color change information from the outside.

In an optional embodiment, the thermochromic layer is arranged on the outer surface of the substrate layer by means of spray coating, printing or heat press attachment.

Beneficial effects: by means of spray coating, the thermochromic layer is spray coated on the outer surface of the substrate layer, thus the thermochromic layer can be evenly covered on the outer surface of the substrate layer, thereby ensuring accuracy and consistency of temperature monitoring. By adjusting frequency of spray coating, concentration of coat, and parameters of spray coating equipment, thickness of the thermochromic layer may be easily controlled to meet different temperature sensitivity and usage requirements. In addition, a spray coating method is relatively fast and suitable for large-scale production, and can complete preparation of the thermochromic layers on a large number of substrates in a shorter period of time, improve production efficiency, and reduce production costs.

Thermochromic pigments are dispersed into printing ink and then applied to the outer surface of the substrate layer by means of printing. In this way, partial pattern printing (such as temperature warning signs) or full coverage printing can be achieved, to make it convenient for personalized design.

By means of heat press attachment, the existing thermochromic layer may be attached to the outer surface of the substrate layer, which is beneficial for distribution control of quality of materials. Furthermore, the existing thermochromic layer may be attached in some regions of the substrate layer according to demands.

In an optional embodiment, the bag film also includes a protective layer, which is covered on the outer surface of the thermochromic layer.

Beneficial effects: in practical use, the surface of the bag film may be scratched by tools or other components. By providing the protective layer on the outer surface of the thermochromic layer, the thermochromic layer is prevented from being directly worn and scratched, thereby maintaining integrity and performance of the thermochromic layer.

In an optional embodiment, the bag film is formed by the thermochromic layer and the substrate layer by means of multi-layer coextrusion, and the thermochromic layer is embedded within the substrate layer.

Beneficial effects: the multi-layer coextrusion allows the thermochromic layer and the substrate layer to fuse with each other at a molecular level, thereby forming a tight whole, which can significantly improve adhesion between the two layers, thereby effectively preventing the thermochromic layer from falling off or peeling during use, thus ensuring the stability and integrity of the bag film structure.

In the process of multi-layer coextrusion, the thermochromic layer can be uniformly embedded within the substrate layer, avoiding the situation of local excessive thickness or thinness, ensuring consistency and stability of thermochromism on the entire surface of the bag film, such that the bag film can accurately sense the temperature at different positions and present corresponding color changes.

By embedding the thermochromic layer within the substrate layer, the substrate layer can provide physical protection for the thermochromic layer, protecting the thermochromic layer from direct influences of external environmental factors, such as wear, scratches, ultraviolet radiation, and chemical corrosion, etc. This helps to maintain the performance of the thermochromic layer, extend its service life, and ensure that the thermochromic layer can accurately respond to temperature during long-term use.

In addition, as a continuous processing technology, the multi-layer coextrusion can complete the recombination of the thermochromic layer and the substrate layer in one operation, thereby greatly improving the production efficiency and reducing the production costs.

In an optional embodiment, a material of the substrate layer is thermoplastic polymer.

Beneficial effects: the thermoplastic polymer may be nylon, polyethylene, ethylene-vinyl acetate copolymer, etc. The nylon has excellent mechanical strength and wear resistance, so the bag film made from the nylon can withstand larger tensile and frictional forces, and is less likely to rupture or damage.

The polyethylene has higher chemical stability, is less likely to corrosion, and has good transparency. So the bag film made of the polyethylene can clearly show the wind turbine blades inside the bag film. When the color of the bag film changes, the operator can timely observe the color change.

The ethylene-vinyl acetate copolymer has good elasticity and flexibility, and thus can be quickly and firmly sealed during a heat sealing process to form a good sealing effect to prevent leakage of the bag film. Furthermore, the ethylene-vinyl acetate copolymer has higher heat sealing strength, which can ensure airtightness and integrity of the bag film during use.

Polyester has extremely high transparency and glossiness, and also has higher strength, hardness, and rigidity. So the bag film made of the polyester can withstand greater pressure and weight, is less likely to deform, and can provide reliable support and protection for items inside the bag film.

In an optional embodiment, a thickness of the substrate layer ranges from 30 µm to 150 µm.

Beneficial effects: when the thickness of the substrate layer is above 30 µm, this can provide sufficient structural support for the bag film, making it have good tensile strength and tear resistance. So the bag film is less likely to rupture or damage during use, and can bear a certain weight of items and withstand a certain degree of external pressures, frictions, etc. The thickness of the substrate layer is not more than 150 µm, this can ensure that the bag film does not become too hard and brittle due to excessive thickness, and still maintains good flexibility and folding endurance, making it convenient for folding, sealing and other operations. Furthermore, the bag film can also cushion energy through deformation when subjected to the external forces, thereby reducing the risk of rupture.

### BRIEF DESCRIPTION OF THE DRAWINGS

To describe the technical solutions in the embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a cross-sectional view of a vacuum infusion bag film structure for wind turbine blades according to an embodiment of the present disclosure; and
FIG. 2 is a cross-sectional view of the vacuum infusion bag film structure for the wind turbine blades according to another embodiment of the present disclosure.

Reference numerals in the accompanying drawings:
bag film 100; substrate layer 110; thermochromic layer 120; and protective layer 130.

### DETAILED DESCRIPTION

In related technologies, in manufacturing processes of wind turbine blades, a vacuum infusion process is a commonly used composite material forming method. However, during vacuum infusion and curing processes, exothermic reaction of the resin may cause local excess temperature. Traditional temperature monitoring methods (such as thermocouples or infrared temperature measurement) generally can only achieve "point" or "line" monitoring, which is difficult to cover entire surfaces of wind turbine blades and thus has blind spots in monitoring, resulting in higher quality risks and production costs in the manufacturing processes of the wind turbine blades.

Therefore, to reduce the blind spots in monitoring product surface temperature during the manufacturing processes of the wind turbine blades, a large number of sensors are installed around the wind turbine blades to monitor the temperature of the wind turbine blades through the sensors. Due to larger sizes of the wind turbine blades, a large number of sensors are required, which increases the production costs and equipment maintenance difficulties.

On this basis, inventors of the present disclosure have invented a vacuum infusion bag film structure for the wind turbine blades. By arranging a thermochromic layer on the bag film, a real-time and visual temperature monitoring means can be provided during blade heating and curing or maintenance heating. The thermochromic layer can cover the entire bag film or a partial region of the bag film, such that when the bag film is attached to surfaces of the wind turbine blades, the region covered by the thermochromic layer can be used to monitor local temperature anomaly during vacuum infusion process of the wind turbine blades. Once the surface temperature of the region covered by the thermochromic layer exceeds a preset threshold, the color changes from a first color to a second color (for example, changes from a light color to a dark color), so an operator can intuitively see the color-changing region, thereby achieving comprehensive and real-time temperature monitoring of the surfaces of the wind turbine blades, thus avoiding neglect of local overheating caused by monitoring blind spots.

To make the objectives, technical solutions, and advantages of the embodiments of the present disclosure clearer, the technical solutions in the embodiments of the present disclosure will be described clearly and completely below, in conjunction with the accompanying drawings in the embodiments of the present disclosure. Apparently, the described embodiments are some but not all of the embodiments of the present disclosure.

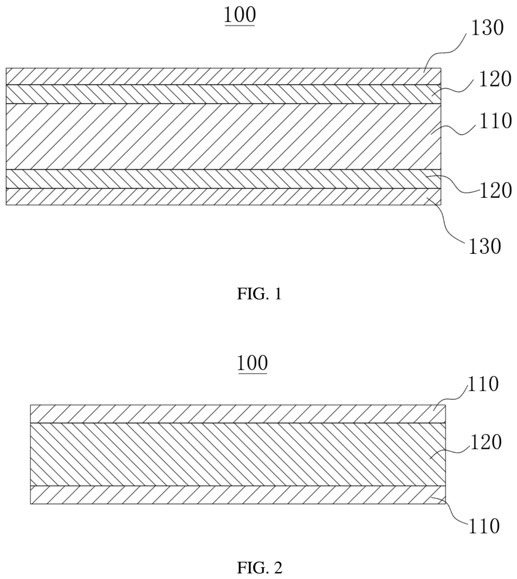

To solve the above technical problems, the embodiments of the present disclosure are described below with reference to FIGS. 1 to 2.

According to the embodiments of the present disclosure, in one aspect, as shown in FIGS. 1 to 2, there is provided a vacuum filled bag film structure for wind turbine blades, comprising at least one bag film 100.

Specifically, as shown in FIGS. 1 and 2, the bag film 100 includes a substrate layer 110 and a thermochromic layer 120, where the thermochromic layer 120 is arranged on the substrate layer 110 or embedded within the substrate layer 110.

Specifically, the thermochromic layer 120 is configured to change color in response to temperature change to monitor local temperature anomaly during a vacuum infusion process of the wind turbine blades. When a temperature of a region covered by the thermochromic layer 120 exceeds a preset threshold, the thermochromic layer 120 changes from a first color to a second color, and the first color is different from the second color.

In the vacuum infusion bag film structure for the wind turbine blades, because the substrate layer 110 is provided on the bag film 100, the substrate layer 110 can ensure that the bag film 100 has better airtightness and mechanical strength. By arranging the thermochromic layer 120 on the bag film 100, a real-time and visual temperature monitoring means can be provided during blade heating and curing or maintenance heating. The thermochromic layer 120 can cover the entire bag film 100 or a partial region of the bag film 100, such that when the bag film 100 is attached to surfaces of the wind turbine blades, where the region covered by the thermochromic layer 120 can be used to monitor local temperature anomaly during vacuum infusion process of the wind turbine blades. Once the surface temperature of the region covered by the thermochromic layer 120 exceeds the preset threshold, the color changes from the first color to the second color (for example, changes from the light color to the dark color), so an operator can intuitively see the color-changing region, thereby achieving comprehensive and real-time temperature monitoring of the surfaces of the wind turbine blades, thus avoiding neglect of local overheating caused by monitoring blind spots.

During vacuum infusion and curing processes, exothermic reaction of resin may readily cause local excess temperature. The bag film structure can quickly respond to the temperature change. When the local temperature rises abnormally beyond the preset threshold, the region covered by the thermochromic layer 120 immediately changes color, and a warning is issued to the operator in a timely manner. If the local temperature anomaly can be detected in a timely manner, the operator can intervene promptly, which can effectively avoid quality problems caused by the local overheating, reduce defect rate of the wind turbine blades, improve product quality, and ensure reliability and stability of the wind turbine blades in actual operation.

Meanwhile, using this bag film structure for temperature monitoring does not require complex equipment installation and debugging. The operator only need to observe the color changes of the bag film 100 to determine the temperature of the wind turbine blades. Compared to traditional monitoring methods that require wiring for thermocouples and specialized equipment for infrared temperature measurement for calibration and maintenance, this bag film structure simplifies operation processes and reduces equipment procurement, installation, and maintenance costs.

In addition, usage of this bag film structure is basically the same as that of ordinary bag films 100, and there is no need to change vacuum pumping, laying methods or curing processes. What is needed is the thermochromic layer 120 additionally provided in a multi-layer structure of the bag film 100 itself, with minimal process changes and easy large-scale promotion.

Specifically, the substrate layer 110 may be made of high temperature resistant polymer such as nylon or polyethylene, but the embodiments of the present disclosure do not impose specific restriction on the material for the substrate layer 110.

Specifically, the thermochromic layer 120 is a functional layer that is sensitive to temperature change and can visually present temperature information through color change. The thermochromic layer 120 is mainly comprised of thermochromic pigments/microcapsules and binders or dispersing media, to achieve the color change through specific chemical reactions or physical changes, thus having various characteristics and application advantages.

Specifically, the thermochromic layer 120 may be covered on the outer surface of the substrate layer 110. The outer surface of the substrate layer 110 may be completely covered with the thermochromic layer 120, or may only be partially covered with the thermochromic layer 120. In the embodiments of the present disclosure, there is no specific restriction on coverage size of the thermochromic layer 120 on the substrate layer 110. Specifically, the thermochromic layer 120 may also be embedded within the substrate layer 110.

It should be noted that the first color is different from the second color. The first color represents the color of the bag film 100 under normal temperature of the wind turbine blades, while the second color represents the color of the bag film 100 when the temperature exceeds the preset threshold. In actual production, if the thermochromic layer 120 of the bag film 100 under the normal temperature is set to a light color such as light blue, when the local temperature exceeds the preset threshold, such as reaching 60°C, the thermochromic layer 120 changes to a dark color such as dark black. The operator can quickly detect temperature anomaly from the obvious color change without the need for additional complex equipment or data analysis. In this way, the operator can intuitively determine which regions on the surfaces of the wind turbine blades have higher temperatures.

Specifically, selection of the first color and the second color may be adjusted according to actual production scenarios and requirements. For materials or production processes of some wind turbine blades sensitive to temperature change, a combination of colors (such as yellow and red) with higher contrast may be selected to make display of the temperature change more prominent. For certain situations where different temperature ranges need to be distinguished, a variety of different second colors may be set to correspond to different temperature thresholds, providing the operator with more detailed temperature information and helping the operator to control the production process more accurately.

In one embodiment, the thermochromic layer 120 is a reversible thermochromic layer, and when the surface temperature of the region covered by the thermochromic layer 120 decreases from a state exceeding the preset threshold to below the preset threshold, the color of the region covered by the thermochromic layer 120 changes from the second color to the first color.

In the production process of the wind turbine blades, resin curing is a dynamic process, during which the temperature may constantly change. The reversible thermochromic layer 120 can track the temperature change in real time. When the temperature of the region covered by the thermochromic layer 120 exceeds the preset threshold, the color changes from the first color to the second color, thereby alerting the operator to the temperature anomaly. When the temperature returns to normal, the color changes back from the second color to the first color. In this way, the operator can continuously monitor temperature fluctuations and promptly recognize potential issues. In an early stage of resin curing, due to intense chemical reactions, local temperature may fluctuate frequently. Reversible thermochromic properties allow the operator to grasp the temperature situation at any time, thereby ensuring that the entire curing process is carried out within an appropriate temperature range. During the production process, if the temperature anomaly is detected, the operator may take measures to reduce the temperature. Once the temperature returns to normal, the color of the reversible thermochromic layer 120 may return to the first color, and subsequent operations may be carried on without waiting for the entire production process to end before checking and adjusting. This avoids production interruptions and delays caused by temperature issues and improves the production efficiency.

The reversible thermochromic properties help the operator analyze temperature variation trends. By observing frequency and duration of color changes, the operator can judge severity and duration of the temperature anomaly. If a certain region frequently changes color, it indicates that the temperature fluctuation in this region is larger, and there may be poor heat dissipation or other problems. If the color change lasts for a longer time, it indicates that the temperature anomaly is severe and process parameters need to be adjusted in a timely manner.

Specifically, production of the wind turbine blades generally is large-scale and continuous. The reversible thermochromic layer 120 may be used multiple times, and the temperature can be effectively monitored in each production cycle. Compared to single-use or irreversible monitoring methods, this greatly reduces the production costs. For example, when a production line produces a plurality of wind turbine blades every day, if the irreversible chromatic bag film 100 is used, a new bag film 100 needs to be replaced each time, which leads to higher costs. Whereas the reversible chromatic bag film 100 can be reused repeatedly. As long as its performance is stable, the reversible chromatic bag film 100 can continue to serve the production.

Specifically, a material for the reversible thermochromic layer may be an inorganic thermochromic material, an organic thermochromic material, and so on, but the embodiments of the present disclosure do not impose specific restriction on the material for the reversible thermochromic layer.

For example, pure VO2, an inorganic thermochromic material may be selected as the material for the reversible thermochromic layer, and the color of the pure VO2 may change with temperature and composition changes. Within a certain temperature range, the color may reversibly change between an achromatic color, light yellow, and dark blue.

For example, Spiropyrans, a class of organic thermochromic materials, may be selected as the material for the reversible thermochromic layer. At different temperatures, a molecular structure of the Spiropyran may change between a spirane structure and an open-loop structure, resulting in a color change, such as changing from an achromatic color to blue or purple.

In one embodiment, the thermochromic layer 120 is an irreversible thermochromic layer, and when the surface temperature of the region covered by the thermochromic layer 120 decreases from the state exceeding the preset threshold to below the preset threshold, the color of the region covered by the thermochromic layer 120 remains the second color.

The irreversible thermochromic layer can accurately record the temperature exceeding the preset threshold, and regardless of subsequent temperature changes, a color-changing region can remain the second color, providing intuitive and tamper-proof temperature anomaly records for the production process. This helps the operator to have a clear understanding of which parts of the wind turbine blades having experienced temperature issues, and of approximate severity and scope of the issues during subsequent quality inspection and analysis, making it easier to trace and identify potential quality hazards.

A preset threshold temperature of the reversible thermochromic layer generally ranges between 50°C and 80°C. When the temperature of the wind turbine blades exceeds 80°C , the reversible thermochromic layer cannot change color according to an established color-changing mechanism to remind the operator because the temperature exceeds a set threshold range. The preset threshold temperature of the irreversible thermochromic layer may be flexibly set to exceed 80°C. When the temperature of the wind turbine blades exceeds 80°C, the irreversible thermochromic layer can change color according to its own set threshold above 80°C, to remind the operator, to prevent the bag film 100 from being damaged by high temperature and from causing rupture.

There are a great variety of materials for the irreversible thermochromic layer, and commonly used ones includ phosphates, sulfates, nitrates, oxides, and sulfides of lead, nickel, chromium, zinc, cobalt, iron, cadmium, strontium, magnesium, barium, molybdenum, manganese or the like, and methyl violet, phenol compounds, emathlite, azo pigments, and arylmethane pigments, etc. Specifically, high-temperature resistant fluorane fuels may be used as leuco dyes, and p-toluenesulfonic acid is used as a color developer and is microencapsulated to serve as a disposable temperature indicator for monitoring temperature about 100°C.

In one embodiment, at least two bag films 100 are provided, and the at least two bag films 100 are successively nested. Wherein, the thermochromic layer 120 of at least one bag film 100 is a reversible thermochromic layer, and the thermochromic layer 120 of at least one bag film 100 is an irreversible thermochromic layer.

The preset threshold temperature of the reversible thermochromic layer generally ranges between 50 °C and 80 °C, and the preset threshold temperature of the irreversible thermochromic layer may exceed 80°C, and combination of both can effectively monitor a wider temperature range. Under normal temperature fluctuations, the reversible thermochromic layer may provide real-time feedback on the temperature change, allowing the operator to understand whether the temperature fluctuates within a normal range. When the temperature exceeds 80°C, the irreversible thermochromic layer begins to play a role in filling a monitoring gap of the reversible thermochromic layer in a high temperature range, thereby ensuring effective monitoring of the entire temperature range of the wind turbine blades.

By observing the color changes of the reversible and irreversible thermochromic layers on different bag films 100, the operator may more accurately identify potential issues with the wind turbine blades. For example, when the reversible thermochromic layer displays a normal temperature, but the irreversible thermochromic layer changes color, it indicates that the blades may likely have experienced a brief period of high temperature anomaly.

Using the at least two bag films 100 and setting the reversible and irreversible thermochromic layers respectively are equivalent to increasing redundancy to the temperature monitoring system. Even if one of the bag films 100 or one of the thermochromic layers malfunctions or is disturbed by external factors, the other bag film 100 and the other thermochromic layer can still operate properly and continue to provide temperature information, thereby ensuring the reliability of the entire monitoring system, and reducing the risk of safety accidents caused by monitoring failure.

For example, taking two bag films 100 as an example, one bag film 100 is nested on the other bag film 100. One bag film 100 is the reversible thermochromic layer, and the other bag film 100 is the irreversible thermochromic layer. The reversible thermochromic layer is responsible for monitoring changes within a normal operating temperature range, allowing the operator to know about the real-time temperature of the blades at any time and to determine whether the operation is normal. The irreversible thermochromic layer concentrates on monitoring high-temperature anomaly. As long as the temperature exceeds 80°C, a color change record may be made, thereby providing a clear evidence for the operator indicating that the blades have experienced high temperatures regardless of subsequent temperature change. The second color of the reversible thermochromic layer of the bag film 100 may be black, and the second color of the irreversible thermochromic layer of the bag film 100 may be red. The two colors are different, so the operator can directly determine the temperature of the region covered by the thermochromic layer 120 through the colors.

In the vacuum infusion process, the bag film 100 attached to the wind turbine blades may communicate with vacuum suction holes on a mold. Through the vacuum suction holes, air inside the bag film 100 can be evacuated to form a vacuum state. In this way, the air on surfaces of the mold and a material to be infused can be eliminated, to prevent generation of bubbles during infusion, thereby improving compactness and quality of the infusion. The remaining bag films 100 may also communicate with the vacuum suction holes of the mold to extract the air between two adjacent bag films 100. After the air is extracted, the nested bag films 100 can be tightly attached to each other, allowing the bag films 100 that are not directly attached to the wind turbine blades to accurately monitor temperature of the blades. Because the tight attachment facilitates heat conduction, a temperature monitoring function of the bag film 100 is not adversely affected by an air layer, such that the temperature changes of the wind turbine blades can be accurately reflected, providing reliable data for monitoring and maintenance of operating states of the wind turbine blades.

In one embodiment, as shown in FIG. 1, the thermochromic layer 120 is arranged on the outer surface of the substrate layer 110.

The thermochromic layer 120 is positioned on the outer surface, such that the thermochromic layer 120 can come into direct contact with external environment or an monitored object, to sense the temperature change more quickly and accurately. There is no need to transfer heat through an intermediate medium such as the substrate layer 110, thereby reducing losses and delays during the heat transfer process, allowing the thermochromic layer 120 to more sensitively capture subtle temperature change and improve accuracy of temperature monitoring. The thermochromic layer 120 on the outer surface is easier to observe, so people can directly and intuitively obtain color change information from the outside.

Specifically, the thermochromic layer 120 may also be arranged on an inner surface of the substrate layer 110, allowing the thermochromic layer 120 to directly attach to the wind turbine blades. Alternatively, the thermochromic layer 120 may be arranged on both the inner surface and the outer surface of the substrate layer 110. By providing a plurality of thermochromic layers 120, when the plurality of thermochromic layers 120 change colors simultaneously, the color changes of the plurality of thermochromic layers 120 may be obvious enough to timely attract the attention of the operator.

In one embodiment, the thermochromic layer 120 is arranged on the outer surface of the substrate layer 110 by means of spray coating, printing or heat press attachment.

By means of spray coating, the thermochromic layer 120 is spray coated on the outer surface of the substrate layer 110, thus the thermochromic layer 120 can be evenly covered on the outer surface of the substrate layer 110, thereby ensuring accuracy and consistency of temperature monitoring. By adjusting frequency of spray coating, concentration of coat, and parameters of spray coating equipment, thickness of the thermochromic layer 120 may be easily controlled to meet different temperature sensitivity and usage requirements. In addition, a spray coating method is relatively fast and suitable for large-scale production, and can complete preparation of the thermochromic layers 120 on a large number of substrates in a shorter period of time, improve the production efficiency, and reduce the production costs.

The thermochromic pigments are dispersed into printing ink and then applied to the outer surface of the substrate layer 110 by means of printing. In this way, partial pattern printing (such as temperature warning signs) or full coverage printing can be achieved, to make it convenient for personalized design.

By means of heat press attachment, the existing thermochromic layers 120 may be attached to the outer surface of the substrate layer 110, which is beneficial for distribution control of quality of materials. Furthermore, the existing thermochromic layers 120 may be attached in some regions of the substrate layer 110 according to demands.

Specifically, the thermochromic layer 120 may be arranged on some regions of the outer surface of the substrate layer 110 by means of spray coating, printing, or heat press attachment. For example, the thermochromic layer 120 may be arranged in temperature monitoring blind spots such as Balsa wood core, PET core material, and resin rich regions.

In one embodiment, as shown in FIG. 1, the bag film 100 also includes a protective layer 130, which is covered on the outer surface of the thermochromic layer 120.

In practical use, the surface of the bag film 100 may be scratched by tools or other components. By providing the protective layer 130 on the outer surface of the thermochromic layer 120, the thermochromic layer 120 is prevented from being directly worn and scratched, thereby maintaining integrity and performance of the thermochromic layer 120.

Specifically, the protective layer 130 may be selected from a polyester film, a polypropylene film, polyurethane coating, etc., but the embodiments of the present disclosure do not impose specific restrictions on the material type for the protective layer 130.

In one embodiment, as shown in FIG. 2, the bag film 100 is formed by the thermochromic layer 120 and the substrate layer 110 by means of multi-layer coextrusion, and the thermochromic layer 120 is embedded within the substrate layer 110.

The multi-layer coextrusion allows the thermochromic layer 120 and the substrate layer 110 to fuse with each other at a molecular level, thereby forming a tight whole, which can significantly improve adhesion between the two layers, thereby effectively preventing the thermochromic layer 120 from falling off or peeling during use, thus ensuring the stability and integrity of the bag film structure.

In the process of multi-layer coextrusion, the thermochromic layer 120 can be uniformly embedded within the substrate layer 110, avoiding the situation of local excessive thickness or thinness, ensuring consistency and stability of thermochromism on the entire surface of the bag film 100, such that the bag film 100 can accurately sense the temperature at different positions and present corresponding color changes.

By embedding the thermochromic layer 120 within the substrate layer 110, the substrate layer 110 can provide physical protection for the thermochromic layer 120, protecting the thermochromic layer 120 from direct influences of external environmental factors, such as wear, scratches, ultraviolet radiation, and chemical corrosion, etc. This helps to maintain the performance of the thermochromic layer 120, extend its service life, and ensure that the thermochromic layer 120 can accurately respond to temperature during long-term use.

In addition, the multi-layer coextrusion is a continuous processing technology that can complete the compositing of the thermochromic layer 120 and the substrate layer 110 in one operation, thereby greatly improving the production efficiency and reducing the production costs.

In one embodiment, a material of the substrate layer 110 is thermoplastic polymer. The thermoplastic polymer may be any one of nylon, polyethylene, ethylene-vinyl acetate copolymer, or polyester.

The nylon has excellent mechanical strength and wear resistance, so the bag film 100 made from the nylon can withstand larger tensile and frictional forces, and is less likely to rupture or damage.

The polyethylene has higher chemical stability, is less likely to corrosion, and has good transparency. So the bag film 100 made of the polyethylene can clearly show the wind turbine blades inside the bag film 100. When the color of the bag film 100 changes, the operator can timely observe the color change.

The ethylene-vinyl acetate copolymer has good elasticity and flexibility, and thus can be quickly and firmly sealed during a heat sealing process to form a good sealing effect to prevent leakage of the bag film 100. Furthermore, the ethylene-vinyl acetate copolymer has higher heat sealing strength, which can ensure airtightness and integrity of the bag film 100 during use.

The polyester has extremely high transparency and glossiness, and also has higher strength, hardness, and rigidity. So the bag film 100 made of the polyester can withstand greater pressure and weight, is less likely to deform, and can provide reliable support and protection for items inside the bag film 100.

In one embodiment, the thickness of the substrate layer 110 ranges from 30 µm to 150 µm.

When the thickness of the substrate layer 110 is above 30 µm, this can provide sufficient structural support for the bag film 100, making it have good tensile strength and tear resistance. So the bag film 100 is less likely to rupture or damage during use, and can bear a certain weight of items and withstand a certain degree of external pressures, frictions, etc. The thickness of the substrate layer 110 is not more than 150 µm, this can ensure that the bag film 100 does not become too hard and brittle due to excessive thickness, and still maintains good flexibility and folding endurance, making it convenient for folding, sealing and other operations. Furthermore, the bag film 100 can also cushion energy through deformation when subjected to the external forces, thereby reducing the risk of rupture.

The terms such as "upper" and "lower" for describing relative positional relationships of various structures in the drawings are merely for the purpose of concise description rather than limiting the implementable scope of the present disclosure. The changes or adjustments of the relative relationship without a substantial modification to the technical solutions are regarded as being covered by the implementable scope of the present disclosure.

It is to be noted that in the present disclosure, unless specified or limited otherwise, a first feature "on" or "below" a second feature may include an embodiment in which the first feature is in direct contact with the second feature, and may also include an embodiment in which the first feature and the second feature are in indirect contact via an intermediary. Furthermore, a first feature "on," "above," or "on top of" a second feature may include an embodiment in which the first feature is right or obliquely "on," "above," or "on top of" the second feature, or just means that the first feature is at a height higher than that of the second feature. A first feature "below," "under," or "on bottom of" a second feature may include an embodiment in which the first feature is right or obliquely "below," "under," or "on bottom of" the second feature, or just means that the first feature is at a height lower than that of the second feature.

In addition, in the present disclosure, unless specified or limited otherwise, terms "mounted", "connected", "coupled", "fixed" and so on should be understood in a broad sense, which may be, for example, a fixed connection, a detachable connection or integrated connection, a direct connection or indirect connection by means of an intermediary, an internal communication between two elements or an interaction relationship between two elements. The specific significations of the above terms in the present disclosure may be understood in the light of specific conditions by persons of ordinary skill in the art.

Reference throughout this specification to the terms "an embodiment," "some embodiments," "an exemplary embodiment," "an example," "a specific example," or "some examples," means that a specific feature, structure, material, or characteristic described in connection with the embodiment or example is included in at least one embodiment or example of the present disclosure. The schematic representation of the above terms throughout this specification are not necessarily referring to the same embodiment or example. Furthermore, the specific features, structures, materials, or characteristics set forth may be combined in any suitable manner in one or more embodiments or examples.

Finally, it is to be noted that the foregoing embodiments are merely intended for describing the technical solutions of the present disclosure, but not for limiting the present disclosure. Although the present disclosure is described in detail with reference to the foregoing embodiments, persons of ordinary skill in the art should understand that they may still make modifications to the technical solutions described in the foregoing embodiments or make equivalent replacements to some or all technical features thereof, which does not make corresponding technical solutions in essence depart from the scope of the technical solutions of the embodiments of the present disclosure.

## Claims

1. A vacuum infusion bag film structure for wind turbine blades comprising:
at least one bag film (100), the bag film (100) comprising a substrate layer (110) and a thermochromic layer (120), wherein the thermochromic layer (120) is arranged on the substrate layer (110) or embedded within the substrate layer (110); and
the thermochromic layer (120) is configured to change color in response to temperature change to monitor local temperature anomaly during a vacuum infusion process of the wind turbine blades; when a temperature of a region covered by the thermochromic layer (120) exceeds a preset threshold, the thermochromic layer (120) changes from a first color to a second color, and the first color is different from the second color.

2. The vacuum infusion bag film structure for the wind turbine blades according to claim 1, wherein the thermochromic layer (120) is a reversible thermochromic layer, and when a surface temperature of the region covered by the thermochromic layer (120) decreases from a state exceeding the preset threshold to below the preset threshold, a color of the region covered by the thermochromic layer (120) changes from the second color to the first color.

3. The vacuum infusion bag film structure for the wind turbine blades according to claim 1, wherein the thermochromic layer (120) is an irreversible thermochromic layer, and when a surface temperature of the region covered by the thermochromic layer (120) decreases from a state exceeding the preset threshold to below the preset threshold, a color of the region covered by the thermochromic layer (120) remains the second color.

4. The vacuum infusion bag film structure for the wind turbine blades according to claim 1, wherein at least two of the bag films (100) are provided, and the at least two bag films (100) are successively nested; and
wherein the thermochromic layer (120) of at least one bag film (100) is a reversible thermochromic layer, and the thermochromic layer (120) of at least one bag film (100) is an irreversible thermochromic layer.

5. The vacuum infusion bag film structure for the wind turbine blades according to any one of claims 1 to 4, wherein the thermochromic layer (120) is arranged on an outer surface of the substrate layer (110).

6. The vacuum infusion bag film structure for the wind turbine blades according to claim 5, wherein the thermochromic layer (120) is arranged on the outer surface of the substrate layer (110) by means of spray coating, printing or heat press attachment.

7. The vacuum infusion bag film structure for the wind turbine blades according to claim 5, wherein the bag film (100) further comprises a protective layer (130), and the protective layer (130) is covered on an outer surface of the thermochromic layer (120).

8. The vacuum infusion bag film structure for the wind turbine blades according to any one of claims 1 to 4, wherein the bag film (100) is formed by the thermochromic layer (120) and the substrate layer (110) by means of multi-layer coextrusion, and the thermochromic layer (120) is embedded within the substrate layer (110).

9. The vacuum infusion bag film structure for the wind turbine blades according to any one of claims 1 to 4, wherein a material of the substrate layer (110) is thermoplastic polymer.

10. The vacuum infusion bag film structure for the wind turbine blades according to claim 9, wherein a thickness of the substrate layer (110) ranges from 30 µm to 50 µm.
